# EUROPEAN PATENT APPLICATION

(11) **EP 1 690 591 A2**
(43) Date of publication of application: **16.08.2006**
(21) Application number: 06075273.0
(22) Date of filing: 07.02.2006
(51) Int. Cl.: B01D 65/02, B01D 65/08, B01D 29/66

(54) **Apparatus and method for filtering liquid**

(30) Priority: 10.02.2005 NL 1028247
(71) Applicant: Fluxxion B.V., 5656 AA Eindhoven (NL)
(72) Inventor: Vos, Jan, 3940 Hechtel-Eksel (BE); Adriaans, Petrus Johannes Martinus, 5741 GM Beek en Donk (NL)
(74) Representative: Winckels, Johannes Hubertus F.

(57) **Abstract**

A liquid is filtered with a microsieve (104a). Use is made of a crossflow channel (104b) running along a supply surface of the microsieve, and of a drain (104c) connected to a drain surface of the microsieve. During a filtering phase, a pressure drop is maintained from a point in the crossflow channel upstream of the microsieve to a point in the drain. The filtering phase is repeatedly interrupted by reducing a flow limitation in the crossflow channel downstream of the microsieve, such that a pressure difference across the microsieve reverses sign. As a result, the pressure reversal coincides with an increase of the flow through the crossflow channel, with a strongly cleaning effect on the microsieve.

## Description

This invention relates to an apparatus and method for filtering liquid.

From French patent application No. 2 576 805, a crossflow liquid filtering apparatus is known which utilizes a microsieve. A microsieve has microscopic pores of a diameter of the order of magnitude of a micrometer, with which, for instance, microorganisms can be retained while liquid molecules can pass the microsieve normally. Microsieves are for instance known from European patent application No. 728034.

In filtering through a microsieve having such small pores, use is made of so-called crossflow filtration, whereby the liquid is pumped along the supply surface of the microsieve, with only a fraction of the liquid flowing away through the pores, purified. The rest of the liquid (normally speaking the greater part) is generally collected and pumped along the microsieve again.

In practice, microsieves having such small pores have been found to clog up rapidly. On the supply surface of the microsieve, on the side of the unsieved liquid, a residue layer, such as for instance a layer of slime, is formed. To obtain a sufficient yield of filtered liquid, the residue layer needs to be removed at least in part each time. A known technique to achieve this is temporarily reversing the direction of flow through the microsieve, to thereby press the residue layer off the supply surface of the microsieve.

The French patent application No. 2 576 805 describes *inter alia* that this can be realized by means of a shutoff valve upstream of the microsieve. With it, the supply of liquid can be temporarily interrupted, so that the pressure on the supply side of the microsieve drops, which leads to a pressure reversal across the microsieve. This in turn leads to cleaning of the microsieve. In a related application of the present applicant (NL 1025284), which was not published yet at the time of filing of the present application, also a filtering apparatus is described in which the flow is shut off upstream.

The reversal of the direction of flow through the microsieve can also be effected by raising the pressure on the drain side of the microsieve or by reducing the pressure on the supply side. However, known designs of techniques to realize this have been found not to work satisfactorily. For instance, the liquid pressure on the drain surface of the microsieve can be raised by compressing the volume of a space contiguous to the drain surface with a piston. The piston then needs to be moved back and forth downstream of the microsieve, that is, in the space for "clean" liquid. Cleaning this piston thus becomes a problem in itself.

The liquid pressure on the supply surface of the microsieve can be reduced by pressure reduction on the "dirty side", i.e. in the space contiguous to the supply surface. This technique is obvious in filtering apparatuses in which all of the liquid passes through the sieve, which is possible when using sieves having coarser pores than a microsieve. In that case, it suffices to apply suction to the supply channel. In the case where only a fraction of the liquid flow passes through the sieve and the rest flows past the sieve through a channel, this technique is laborious because suction necessitates a space in the channel that is closed on two sides.

Thus, rather much time is needed to enable suction. Also, the normal flow of the liquid along the supply surface is rendered impossible for a length of time. After such a disturbance, it generally takes some length of time for the normal flow along the surface to be restored again. In many cases, however, the residue layer needs to be removed rather frequently to obtain any yield at all. A long recovery period thus leads to a low efficiency of the filtering process. Also, there is a risk that the residue layer is already being restored again before the normal flow is restored, so that no material of the residue layer is discharged and/or no liquid can flow through the pores before the residue layer is back again.

Although a permanent crossflow counteracts the problems of residue formation, crossflow filtration requires a large pump capacity in proportion to the amount of filtered liquid, since, per passage, only a part of the liquid to be filtered is drained through the filter as clean liquid. In filtering liquids containing ingredients sensitive to frictional forces, such as for instance microorganisms, the use of a heavy duty pump and/or the frequent passage through such a pump is unfavorable because of the increased risk that parts of the liquid get damaged, or change in nature. Special and relatively expensive pumps are needed to reduce this risk.

It is one object of the invention to provide for an increase of the yield of filtration through a microsieve.

It is another object of the invention to prevent damage and/or change of the unfiltered liquid.

It is one alternative object of the invention to reduce the required pump capacity in filtering.

It is another alternative object of the invention to realize an enhanced cleaning effect.

The invention provides an apparatus according to claim 1 and a method according to claim 10. According to the invention, during the filtering process, a filtering phase, in which there is a pressure drop from the supply side of the microsieve to the drain side, is interrupted by a reversing phase, in which the sign of the pressure drop reverses. The reversing phase is effected by temporarily admitting an (enhanced) crossflow along the microsieve. To that end, repeatedly during the filtering process, downstream of the microsieve, a complete or partial obstruction of the crossflow is removed or reduced.

This leads to a greater pressure drop from the supply vessel to the microsieve. The apparatus is so designed that as a result the pressure drop from the supply side of the microsieve to the drain side of the microsieve reverses sign.

In this way, the reversal of the sign coincides with an increase of the crossflow (preferably from a situation where there is substantially no crossflow), so that an enhanced cleaning effect occurs: material is pressed off the microsieve and the (increased) crossflow entrains this material. Thus, a high yield proves possible while cleaning can be done often. Filtering with periodical interruption frequencies of more than 1 Hz, or more than 5 Hz up to in excess of 50 Hz are feasible. The apparatus preferably performs this interruption automatically, for instance periodically with a settable frequency.

The magnitude of the achieved pressure drop across the microsieve in the reversing phase is preferably approximately equal to the pressure drop in the filtering phase, but the invention is not limited thereto: also pressure drops of different magnitudes can be used in the filtering phase and the reversing phase, as long as the direction of the pressure drop (the sign) reverses. The magnitude is preferably determined dynamically, by having the crossflow decrease again (preferably stopping it) before statically a pressure has established at the supply surface. This provides the advantage that the pressure reversal can be realized rapidly.

In one embodiment, the reversing phase is realized by opening a valve on the drain side of the crossflow of the microsieve. After closing of the valve, the pressure rapidly increases to the original level again and a situation arises again in which a part of the liquid flows through the microsieve.

In one embodiment, a bypass channel is provided parallel to the valve. This provides the advantage that also during closure of the valve a crossflow is maintained. Preferably, a flow regulation element, such as a regulating cock, is included in the bypass channel, placed in the crossflow circuit for setting the crossflow current force and the pressure buildup across the microsieve.

Preferably, the required pressure drop during the filtering phase is realized by regulating pressures in a supply vessel and a drain vessel, respectively, whereby these pressures continue to be maintained during the filtering phase as well as the pressure reversing phase. The flow variations provide for modulation of the pressure at the microsieve, which is driven by the pressures in the vessels. Although it would also be possible to use a liquid pump in the supply pipe between the supply vessel and the microsieve to build up the required pressure in the crossflow channel, it is advantageous not to use a liquid pump for this purpose, by making use of the pressure in the supply vessel. In that case, no pump is needed in the supply pipe between the supply vessel and the microsieve to build up the required pressure drop. This reduces the risk of change or damage of the liquid.

In one embodiment, there is provided an auxiliary vessel for collecting liquid which has not flowed through the microsieve. This auxiliary vessel too is preferably held under a regulated pressure. Thus, no pump is needed in the drain pipe between the microsieve and the auxiliary vessel to effect the crossflow. This reduces the risk of change or damage of the liquid.

Liquid from the auxiliary vessel is preferably recirculated to the microsieve. In a first embodiment, this is done by pumping liquid from the auxiliary vessel via a separate connection back to the supply vessel. For this purpose, a pump of a much smaller capacity is needed than would be needed for maintaining a crossflow permanently.

In another embodiment, this is done by each time interchanging the roles of the supply vessel and the auxiliary vessel. To perform the flow variations in each case downstream, in one embodiment, for that purpose, flow reduction elements are arranged between the microsieve and both the auxiliary vessel and the supply vessel. In a further embodiment, these flow reduction elements constitute closures, with which the entire flow from the microsieve to the respective vessel (the auxiliary vessel or the supply vessel, if it functions as auxiliary vessel) is shut off. Upon opening of the closure, a crossflow arises, while the pressure drop across the microsieve is reversed, leading to cleaning of the residue layer on the microsieve. After closure of the valve, filtration recommences.

In another embodiment, one or more valves are used to interchange the connections of the auxiliary vessel and the supply vessel to the liquid circuit with the flow reduction element and the microsieve, so that in both directions use can be made of one and the same dynamic shutoff valve.

These and other objectives and advantages of the invention will be described with reference to the drawing in which a number of embodiments are shown by way of example.
- **Figure 1**: shows a filtering circuit
- Figures 2-4: show filtering circuits
- Figures 5a-c: show a shutoff valve

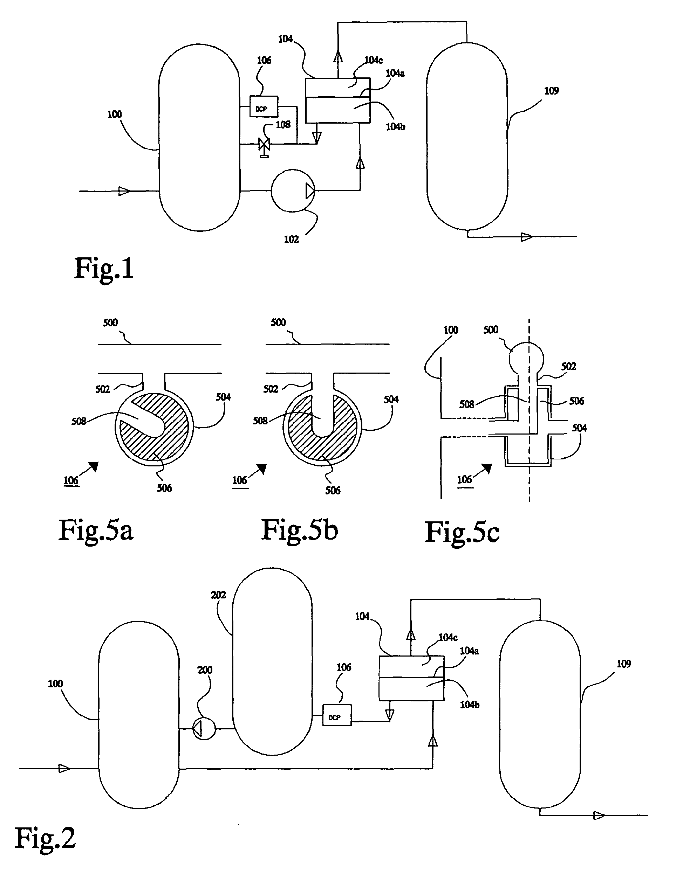

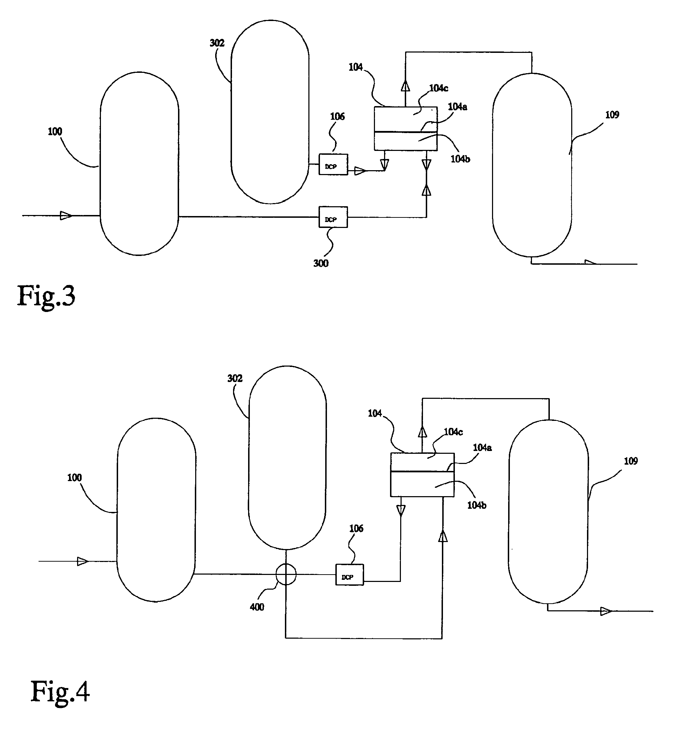

Figure 1 shows a filtering circuit provided with a supply vessel 100, a pump 102, a filter unit 104, a dynamic shutoff valve 106, a regulating cock 108, and a drain vessel 109. Supply vessel 100 has an outlet which is coupled to pump 102. Filter unit 104 contains a supply chamber 104b and a drain chamber 104c, with a microsieve 104a between them. Although only one microsieve 104a is schematically shown, it will be clear that the microsieve in practice will be mounted in a complex assembly, for one thing to guard the microsieve from rupture. Also, a plurality of microsieves may be included, in parallel or in series.

Drain chamber 104c is coupled to a drain vessel 109. On different sides of supply chamber 104b, an inlet and an outlet are arranged, so that liquid flowing from the inlet to the outlet flows along the surface of microsieve 104a. Pump 102 has an outlet which is coupled to the inlet of supply chamber 104b. The outlet is coupled via regulating cock 108 to supply vessel 100. Dynamic shutoff valve 106 is connected in parallel with regulating cock 108.

In operation, pump 102 pumps liquid under pressure to supply chamber 104b. Dynamic shutoff valve 106 is switched periodically to open and close. The pressure in drain vessel 109 and/or the pump intensity of pump 102 is regulated, so that the pressure in drain chamber 104c is lower than in supply chamber 104b when dynamic shutoff valve 106 is closed (or at least temporarily after dynamic shutoff valve 106 is closed). However, the pressure is such that the pressure in drain chamber 104c is higher than in supply chamber 104b when dynamic shutoff valve 106 is open (or at least temporarily after dynamic shutoff valve 106 is opened).

The precise value of the pressure in drain vessel 109 and the intensity of pump 102 required for this depend on the dimensions of the filtering circuit, in particular on the pressure drop occurring across the different pipes when liquid flows through them. The required pressure and pump intensity can be simply chosen by measuring the pressure on opposite sides of microsieve 104a as a function of time at different pumping rates and/or pressure settings of drain vessel 109. If desired, the pressure in supply chamber 104b when dynamic shutoff valve 106 is closed can be adjusted with regulating cock 108.

By switching dynamic shutoff valve 106 periodically to open and close, a periodic pressure reversal across microsieve 104a is thus realized, thereby preventing clogging up of the microsieve. Dynamic shutoff valve 106 and/or regulating cock 108 further provide for feedback of unfiltered liquid to supply vessel 100. In one embodiment, regulating cock 8 is so designed that the ratio between the flow to the storage vessel with shutoff valve 106 open and the flow with shutoff valve 106 closed is settable between 1.1 and 2, and preferably at least between 1.1 and 1.5.

The frequency with which dynamic shutoff valve 106 is switched to open and close is preferably in a range of 0.3 to 50 Hz and more preferably between 0.3 and 10 Hz. The duration of the closure is preferably in a range of 50% to 90% of the period between successive closures. It has been found that the pulsed crossflow thus arising enables an effective cleaning of the microsieve.

For obtaining the desired frequency and duration, dynamic shutoff valve 106 is preferably controlled electronically, for instance by a control computer (not shown). The control computer is preferably arranged to open shutoff valve 106 automatically. In one embodiment, this is done in response to measurements on the yield. But preferably, the control computer does not choose every time point of opening shutoff valve 106 directly in response to detection of diminishing yield. Instead, the control computer opens shutoff valve 106 for instance periodically. Thus, shutoff valve 106 may also be switched already when the yield has not fallen off strongly yet, to prevent soiling. Also when the time points of opening shutoff valve 106 are chosen yield-independently, the control computer may be programmed to adjust the frequency of those time points in a feedback loop on the basis of measuring data on an average yield. However, the switching frequency can also be set to be fixed.

Thus, controlling dynamic shutoff valve to open is an integral part of the filtering process and not an exceptional condition performed incidentally, for instance once an hour or once a day. A filtering phase of the filtering process, in which there is a pressure drop from the supply side of the microsieve to the drain side, is interrupted with a high frequency by a reversing phase, in which the sign of the pressure drop reverses. It has been found that in microsieves a relatively brief pressure reversal suffices for cleaning, provided that it is applied frequently. This is attributed to the slight thickness of the microsieves (length of the pores) which is typically one micrometer or less, so that a brief reversal suffices at a small pressure drop. The frequency of closure is preferably as high as possible, but there is an upper limit which is determined by the speed with which the pressure reversal in the filtering circuit can be realized. It will be clear that the upper limit depends on the dimensions of the specific filtering circuit used and the dynamic properties of the liquid to be filtered. The value to which the pressure in the vessels is regulated, preferably remains the same during opening and closing. The upper limit of the frequency therefore does not depend on the speed with which the pressure in the vessels can be adjusted.

The duration of the closure is preferably in a range of 50% to 90% of the period between successive closures. It has been found that the pulsed crossflow thus arising enables an effective cleaning of the microsieve.

In one embodiment, the pressure stroke is set such that the minimum pressure at the supply surface of the microsieve is substantially equally much below the pressure at the drain surface as the maximum pressure (during closure) at the supply surface of the microsieve is above the pressure at the drain surface. The pressure difference thus prevents the risk of damage to the microsieve, with a maximum cleaning effect. But without departing from the invention, if the excess pressure is normally not in the neighborhood of the pressure above which there is a risk of damage, it is also possible, for instance, to use a greater reduced pressure than this excess pressure. A typical time duration of an interruption that can thus be used for promoting the operation of a microsieve is between 5 and 200 milliseconds.

Figures 5a-c show an embodiment of shutoff valve 106. A pipe 500 extends downstream of filter unit 104 (not shown) to supply vessel 100. Pipe 500 has a branch 502 which terminates in a chamber 504. Provided in chamber 504 is a rotary disc 506, having therein an L-shaped channel 508, which contains an axial part which is centered around the axis of rotation of disc 506, and a radial part which terminates at a circumference of disc 506. The axial part of L-shaped channel 508 is connected to supply vessel 100.

Figures 5a,b show a cross section of shutoff valve 106 in a closed and open position, respectively, in a plane passing radially through disc 506. Disc 506 is set up in chamber 504, such that the circumference of disc 506 virtually blocks the mouth of branch 502 (Figure 5a), unless disc 506 is rotated such that the radial part of the channel aligns with branch 502 (Figure 5b). The rotation of disc 506 is preferably driven by a motor (not shown). The rotation frequency of disc 506 determines the frequency with which shutoff valve 106 is opened. The arc length of the mouth of branch 502 (and the channel) determine the duty cycle. It is noted that the frequency and/or the duty cycle can also be adjusted by driving the disc with a computer-controlled stepping motor.

Fig. 5c shows a cross section in a plane passing through the axis of rotation of disc 506 and through branch 502. Disc 506 is here shown in the open position of shutoff valve 106 (in the position corresponding to Fig. 5b; the broken line corresponds to the cross section shown in Fig. 5b). In this position, there is a connection through L-shaped channel 508 from branch 502 to supply vessel 100. Downstream of branch 502, regulating cock 108 (not shown) is connected to pipe 500 or a restriction is provided in pipe 500 to define a flow upon closure of shutoff valve 106. Although branch 502 has been drawn by way of example at an angle relative to pipe 500, it will be clear that any geometric configuration can be used, so that, for instance, branch 502 can actually be a main branch of pipe 500.

Fig. 2 shows another embodiment of the filtering circuit. In it, supply vessel 100 is connected with the inlet of supply chamber 104b without interposition of a pump. The outlet of supply chamber 104b is connected via dynamic shutoff valve 106 with an intermediate vessel 202. Intermediate vessel 202 is coupled via a pump 200 to supply vessel 100. As a shutoff valve, a valve of the type of Figs. 5a-c can be used, in which case, however, pipe 500 does not need to continue beyond branch 502.

In operation, dynamic shutoff valve 106 is switched periodically to open and close. As there is no flow channel parallel to dynamic shutoff valve 106 (no regulating cock 108), there is in the closed condition no significant crossflow (other than flow arising as a result of liquid flowing from the supply side to the drain side of microsieve 104a). Upon opening of the shutoff valve, there briefly arises a crossflow together with a pressure reversal across microsieve 104a, so that the microsieve is cleaned.

The pressure in supply vessel 100 and drain vessel 109 is regulated such that the pressure in drain chamber 104c is lower than in supply chamber 104b when dynamic shutoff valve 106 is closed, or at least temporarily after dynamic shutoff valve 106 is closed. However, the pressure is such that the pressure in drain chamber 104c is higher than in supply chamber 104b when dynamic shutoff valve 106 is open, or at least temporarily after dynamic shutoff valve 106 is opened. The regulated pressure is for instance realized by regulating a gas pressure above the liquid.

For this type of embodiment, it holds that the precise values of the pressure in the supply vessel 100, the intermediate vessel 202 and the drain vessel 109 that are needed for the required sign reversal of the pressure across the microsieve depend on the dimensions of the filtering circuit, in particular the pressure drop arising across the different pipes when liquid passes through them. The required pressures can be simply selected experimentally. For instance, pressures are chosen such that the pressure drop across microsieve 104a is 400 millibar with the dynamic shutoff valve 106 open, and -400 millibar with the dynamic shutoff valve 106 closed.

The frequency with which dynamic shutoff valve 106 is switched to open and close is preferably in a range of 0.3 to 50 Hz and more preferably in a range of 0.3 to 10 Hz. The duration of the closure is preferably in a range of 50-90%, for instance at approximately 80% of the period between successive closures. It has been found that the pulsed crossflow thus arising enables an effective cleaning of the microsieve.

The advantage of the circuit of Fig. 2 over that of Fig. 1 is that no pump is needed in the supply of unfiltered liquid to microsieve 104a. This prevents change of the liquid due to such a pump and/or damage of microorganisms due to such a pump. A further advantage is that the capacity of the needed pump is much smaller than that which is needed for the embodiment of Fig. 1. In a further embodiment, supply vessel 100 and/or intermediate vessel 202 are provided with a collecting or sedimenting mechanism to collect fouling particles.

Fig. 3 shows a further embodiment of the filtering circuit. In it, two supply vessels 100, 302 are provided, each coupled to supply chamber 104b via a respective dynamic shutoff valve 106, 300. Connections from the first and second supply vessel 100, 302 to supply chamber 104b are situated on different sides of supply chamber 104b, so that liquid flowing between the connections flows along the surface of microsieve 104a. As a shutoff valve, a valve of the type of Figs. 5a-c can be used, in which case, however, pipe 500 does not need to continue beyond branch 502.

In operation, the circuit is switched between a first and second condition. The roles of the supply vessels 100, 302 are interchanged upon switching between these conditions. In the first condition, a first supply vessel 100 and a second supply vessel 302 respectively function as the supply vessel and the intermediate vessel as described in relation to Fig. 2. In the second condition, the second supply vessel 302 and the first supply vessel 100 respectively function as the supply vessel and the intermediate vessel as described in relation to Fig. 2.

In the first condition, the dynamic shutoff valve 300 between the first supply vessel 100 and supply chamber 104b is set in a permanently passing position, while the dynamic shutoff valve 106 between the second supply vessel 302 and supply chamber 104b is switched periodically to pass and to close. In the first condition, in the first supply vessel 100 a higher pressure is maintained than in the second supply vessel 302, so that the liquid between the supply vessels flows along the microsieve 104a in the direction to the dynamic shutoff valve 106 switching periodically open and shut.

In the second condition, the dynamic shutoff valve 106 between the second supply vessel 302 and supply chamber 104b is set in a permanent pass position, while the dynamic shutoff valve 300 between the first supply vessel 100 and supply chamber 104b is periodically switched to pass and close. In the second condition, in the second supply vessel 302, a higher pressure is maintained than in the first supply vessel 100, so that the liquid between the supply vessels flows along the microsieve 104a in the direction to the dynamic shutoff valve 300 periodically switching open and shut.

Thus, the filtering circuit works as described in relation to Fig. 2, except that the liquid is not pumped from the second supply vessel to the first supply vessel while bypassing filter unit 104. Instead, the liquid, after a switch of the condition, is recirculated along the microsieve from the second supply vessel to the first supply vessel. In the embodiment shown, moreover, a provision is arranged for externally adding liquid to one of the supply vessels, in replacement of the liquid which has flowed through the microsieve. Without departing from the invention, however, additional liquid can also be supplied to both vessels.

For switching between the conditions, use is made, for instance, of pressure control circuits (not shown) on the supply vessels 100, 302 and a control computer (not shown) which drives the pressure control circuits and the dynamic shutoff valves 106, 300. The frequency of switching between the first and second condition is considerably lower than the frequency of closure by dynamic shutoff valves 106, 300. In this way, loss of time required for changing pressure in the vessels occurs only when switching between the conditions and not when periodically switching dynamic shutoff valves 106, 300 to open and close. During this periodically switched opening and closing, the value to which the pressure in the vessels is regulated is preferably kept constant. The switch between the conditions is for instance triggered depending on the filling level of the supply vessels 100, 302, thereby preventing the supplying supply vessel becoming depleted to the extent where no liquid is available anymore to supply to a filter unit 104.

Fig. 4 shows another embodiment of the filtering circuit. In it, a four-way valve 400 is arranged between supply vessels 100, 302 and the inlet and outlet of supply chamber 104b. Dynamic shutoff valve 106 is arranged between the drain and four-way valve 400.

In operation, four-way valve 400 is switched between a first and second condition, whereby the roles of supply vessels 100, 302 are interchanged. In the first condition, four-way valve 400 connects the first supply vessel 100 with the inlet of supply chamber 104b and the second supply vessel 302 with the outlet of supply chamber 104b via dynamic shutoff valve 106. In the second condition, four-way valve 400 connects the second supply vessel 302 with the inlet of supply chamber 104b and the first supply vessel 100 with the outlet of supply chamber 104b via dynamic shutoff valve 106. Further, the pressure in the supply vessels 100, 302 in the different conditions is adjusted in accordance with the embodiment of Fig. 3, so that the liquid between the supply vessels flows along the microsieve 104a in a direction to the dynamic shutoff valve 106 periodically switching to open and close.

The embodiments of Figs. 2 to 4 all have the advantage that no pump is needed in the connection between the supply vessel 100, 302 and the filter unit 104. This makes it possible to handle more delicate substances, such as substances containing live microorganisms, than with the embodiment of Fig. 1. The embodiment of Fig. 2 enables a continuous process, but this entails the possible disadvantage that liquid needs to be pumped between the vessels by pump 200. However, this pump can be made of smaller design than pump 102 of Fig. 1, so that this pump gives less rise to problems of damage or change of the liquid. Moreover, it is possible to allow fouling particles to sediment before the liquid flows to the filter unit 104. The embodiments of Figs. 3 and 4 have the advantage that the liquid does not need to pass through a pump. In the embodiment of Fig. 4, moreover, only one dynamic shutoff valve 106 is needed.

The duration of the opening of the shutoff valve is preferably so short that the stroke made by the pressure is dynamically determined by the duration of the opening, that is, the duration is so short that before the end of the period of the opening no stable pressure has established yet at the microsieve. Thus, the pressure stroke augments according as the duration of the opening augments (the pressure stroke is for instance less than 50% of the pressure stroke that would be statically feasible, or in any case less than 90% thereof). The duration of the opening is preferably settable, to set a desired stroke.

As the pressure stroke is dynamically realized, it is possible (in the case of the embodiments of Figs. 2-4) to create more static pressure difference between the vessels than would be necessary for the desired pressure stroke if a static condition were reached (and in the case of the embodiment of Fig. 1 the pump capacity can be chosen to be higher than is needed for statically determined pressure reversal). Thus, the speed at which the pressure reversal is realized each time, can be increased without also increasing the magnitude of the pressure stroke.

Preferably, the duration of opening is chosen such that the minimum pressure at the supply surface of the microsieve (by the end of opening of the shutoff valve) is substantially as much below the pressure at the drain surface as the maximum pressure (during closure) at the supply surface of the microsieve is above the pressure at the drain surface.

Although in the description it has been assumed that liquid from the drain vessel is employed as useful result of the filtering, it will be clear that instead, or in addition, the liquid at the supply side of the microsieve can be a useful product (having an increased concentration of filtered material). All embodiments can be used for this purpose. Mostly, for this purpose, batch processing is desired (whereby the liquid is repeatedly led to microsieve 104b without the liquid being intermediately replenished, until a desired concentration has been reached). Alternatively, a continuous process can be employed, whereby the liquid is not recirculated to the supply vessel anymore.

Although a single microsieve 104a between the supply vessel and the collecting vessel has been shown, it will be clear that without departing from the invention, a plurality of microsieves can be arranged in parallel. Preferably, all these microsieves are equally far from the dynamic shutoff valve 106, so that comparable pressure pulses occur.

Although for the buildup of pressure use has been made of pressures that are maintained in different vessels, it should be realized that other ways of providing the pressure are also possible. In the first place, as shown, with a pump upstream of the microsieve, if such is not undesirable in view of the kind of liquid. Further, for instance, use can be made of pressure control by means of pistons which are connected to the supply channel leading to the microsieve (for instance in branches) or by making use of gravitation effects (hydrostatic pressure) and so forth.

Although the drawing figures show a shutoff valve switching between shutting off and passing the flow, it will be clear that the desired pressure variations can also be realized if the flow through the shutoff valve is not completely shut off, or in that a different kind of component is used than a shutoff valve to temporarily reduce a flow limitation, for instance a component in which an elastic tube is squeezed shut to some extent, in the place of the shutoff valve, a rotary gauze in the tube in the place of the shutoff valve, and so forth. It will be clear, however, that a substantially complete closure is the most efficient manner as far as yield is concerned.

## Claims

1. An apparatus for carrying out a filtering process, which apparatus is provided with:
- a microsieve having a supply surface and a drain surface, mutually connected by pores in the microsieve;
- a crossflow channel passing along the supply surface of the microsieve;
- a drain for filtered liquid, which drain is contiguous to the drain surface;
- means for maintaining during a filtering phase of the filtering process a pressure drop from a point in the crossflow channel upstream of the microsieve to a point in the drain;
**characterized in that** downstream of the supply surface of the microsieve a switchable flow reduction element is included in the crossflow channel, and the apparatus is arranged for repeatedly interrupting the filtering phase during the filtering process by reducing a flow limitation resulting from the flow reduction element, such that as a result of an increased flow through the crossflow channel at least one direction of the pressure drop across the microsieve reverses.

2. An apparatus according to claim 1, provided with a supply vessel from where the crossflow channel runs to the supply surface, and with a drain vessel which is coupled to the drain, and with means for maintaining during the filtering phase and the interruptions mutually different pressures in the supply vessel and the drain vessel, which are determinative of said pressure drop during the filtering phase.

3. An apparatus according to claim 2, further provided with an auxiliary vessel which is coupled to the crossflow channel downstream of the microsieve and the flow reduction element and in which during the filtering phase and the interruptions a further pressure is maintained which is lower than the pressure in the supply vessel.

4. An apparatus according to claim 3, further provided with a pump which is coupled between the auxiliary vessel and the supply vessel for pumping liquid from the auxiliary vessel to the supply vessel.

5. An apparatus according to claim 3, provided with switchable flow reduction elements between the supply surface and, respectively, the supply vessel and the auxiliary vessel.

6. An apparatus according to claim 3, provided with one or more valves between, on the one hand, the auxiliary vessel and the supply vessel and, on the other, ends of the crossflow channel upstream of the supply surface and downstream of the supply surface and the flow reduction element, and arranged to interchange connections of the supply vessel and the auxiliary vessel to the ends.

7. An apparatus according to any one of the preceding claims, wherein the flow reduction element is a flow interrupter arranged for repeatedly interrupting at least substantially the liquid flow through the crossflow channel during filtration.

8. An apparatus according to claim 7, wherein a bypass channel is arranged parallel to the flow interrupter for maintaining a crossflow while the flow interrupter is closed.

9. An apparatus according to any one of the preceding claims, arranged to have the flow increase each time so momentarily that a magnitude of the pressure drop is dynamically determined, by a duration of the increase.

10. A method for filtering a liquid through a microsieve having a supply surface and a drain surface mutually connected by pores, with a crossflow channel running along the supply surface, and a drain connected to the drain surface, in which method
- during a filtering phase, a pressure drop from a point in the crossflow channel upstream of the microsieve to a point in the drain is maintained;
- the filtering phase is repeatedly interrupted by a reversing phase in which a flow limitation in the crossflow channel downstream of the microsieve is reduced such that as a result of an increased flow through the crossflow channel at least one direction of the pressure drop across the microsieve reverses.

11. A method according to claim 10, in which use is made of a supply vessel from where the crossflow channel runs to the supply surface, and of a drain vessel which is coupled to the drain, and in which method for generating said pressure drop during the filtering phase and the interruptions mutually different pressures are maintained in the supply vessel and the drain vessel.

12. A method according to claim 11, wherein use is further made of an auxiliary vessel which is coupled to the crossflow channel downstream of the microsieve and the flow reduction element and in which during the filtering phase and the interruptions a further pressure is maintained which is lower than the pressure in the supply vessel.

13. A method according to claim 12, wherein, bypassing the crossflow channel, liquid is pumped from the auxiliary vessel to the supply vessel.

14. A method according to claim 12, wherein the roles of the supply vessel and the auxiliary vessel are repeatedly interchanged with a lower frequency than the interruption of the filtering phase.

15. A method according to claim 14, wherein use is made of flow reduction elements in the crossflow channel between the auxiliary vessel and the supply surface and between the supply vessel and the supply surface, and wherein in interchanging the roles of the supply vessel and the auxiliary vessel, that flow reduction element is used that is included downstream in the crossflow channel.

16. A method according to claim 14, wherein the crossflow channel has ends which are connected on opposite sides of the supply surface, wherein the flow reduction element is arranged in the crossflow channel between one of the ends and the supply surface, and wherein in interchanging the roles of the supply vessel and the auxiliary vessel connections of the supply vessel and the auxiliary vessel to the ends are interchanged.

17. A method according to any one of claims 10 to 16, wherein the flow during the filtering phase is interrupted downstream substantially completely.

18. A method according to any one of claims 10 to 16, wherein a crossflow is maintained during the filtering phase.

19. A method according to any one of claims 10 to 18, wherein the interruptions of the filtering phase are so momentary that a magnitude of the pressure drop between the supply surface and the drain surface is determined dynamically, by a duration of the interruption.

20. A method according to any one of claims 10 to 19, wherein the flow limitation is periodically reduced with a frequency between 0.3 and 50 Hz.
